# EUROPÄISCHE PATENTSCHRIFT

(11) **EP 0 796 392 B1**
(45) Veröffentlichungstag und Bekanntmachung des Hinweises auf die Patenterteilung: **27.05.1998**
(21) Anmeldenummer: 95940135.7
(22) Anmeldetag: 06.12.1995
(51) Int. Cl.: F02G 1/043, F02G 1/055

(54) **VORRICHTUNG MIT EINEM ANTRIEB UND EINER VOM ANTRIEB ANTREIBBAREN MASCHINE**
DEVICE WITH A DRIVE AND MACHINE CAPABLE OF BEING DRIVEN BY THE DRIVE
DISPOSITIF AVEC UN MECANISME D'ENTRAINEMENT ET MACHINE SUSCEPTIBLE D'ETRE ENTRAINEE PAR LE MECANISME D'ENTRAINEMENT

(30) Priorität: 08.12.1994 CH 3728/94
(43) Veröffentlichungstag der Anmeldung: 24.09.1997
(73) Patentinhaber: Bomin Solar Holding AG, 6302 Zug (CH)
(72) Erfinder: Kleinwächter, Jürgen, D-79541 Lörrach (DE); Kleinwächter, Hans, D-79541 Lörrach (DE); Rochelt, Günther, D-22159 Hamburg (DE)
(74) Vertreter: Castell, Klaus, Dr.-Ing.
(86) Internationale Anmeldenummer: DE9501731
(87) Internationale Veröffentlichungsnummer: WO9618029

(56) Entgegenhaltungen:
- DE-A- 4 109 289
- US-A- 4 227 866
- US-A- 4 414 814
- US-A- 4 776 171

## Beschreibung

Die Erfindung betrifft eine Vorrichtung mit einem Antrieb mit den Merkmalen des Oberbegriffs des Patentanspruchs 1 und ein Verfahren zum Betreiben eines Antriebs.

Eine gattungsgemäße Vorrichtung ist beispielsweise aus der DE 41 09 289 A1 bekannt. Die mit ihr erzeugten Gasdruckschwankungen werden vor allem zum Antrieb von Wasserpumpen, mechanischen Kolben, Kältemaschinen und als elektrischer Stromgenerator genutzt. Eine derartige Vorrichtung hat den Nachteil, daß eine Kurbelwelle und vor allem ein schweres Schwungrad benötigt werden, um den Antrieb in Bewegung zu setzen und in Bewegung zu halten. Das Starten der Vorrichtung ist daher mit großen Kräften verbunden.

Der Erfindung liegt die Aufgabe zugrunde eine gattungsgemäße Vorrichtung zu entwickeln, die leicht zu starten ist, und ein Verfahren, mit dem die Vorrichtung selbsttätig in Bewegung zu setzen ist.

Diese Aufgabe wird vorrichtungsmäßig mit den Merkmalen des Patentanspruchs 1 und verfahrensmäßig mit den Merkmalen des Patentanspruchs 19 gelöst.

Der Erfindung liegt die Erkenntnis zu grunde, daß die Entkoppelung der mechanischen Verbindung von Maschine und Antrieb zwar einen Hilfsantrieb notwendig macht, dadurch das Starten der Maschine jedoch wesentlich erleichtert wird.

Da die Vorrichtung kein Schwungrad, keine Kurbelwelle und auch keinen sonstigen mechanischen Zwischenspeicher benötigt, kann sie sehr leicht gebaut werden. Beim Startvorgang ist nur die Platte in Bewegung zu setzen und da die Platte mit wenig Gewicht ausführbar ist, ist sie ohne Überwindung von wesentlichen Trägheitskräften bewegbar.

Durch die Entkoppelung von Maschine und Hilfsantrieb ist der Vorrichtung mit dem Hilfsantrieb eine beliebige Dynamik aufprägbar, die in einem weiten Bereich variierbar ist. Außerdem ist es möglich die Maschine mit einer anderen Taktfrequenz zu betreiben als den Antrieb.

Der Aufbau der gesamten Vorrichtung benötigt nur wenige, verschleißarme Bauteile und außerdem ist die gesamte Vorrichtung luftdicht ausführbar.

Eine vorteilhafte Ausführungsform sieht vor, daß die Platte gasdurchlässig ist und der Regenerator mit der Platte verbunden ist. Dadurch wird eine sehr kompakte Bauweise erreicht und der Regenerator ist geschützt innerhalb des Gasraumes angeordnet.

Um bei dieser Ausführungsform das Gewicht der mit dem Regenerator verbundenen Platte zu reduzieren, ist es vorteilhaft, wenn der Kühler auf einer der Platte gegenüberliegenden Seite angeordnet ist und ein Profil aufweist, das mit einem entsprechenden Profil der Platte in Eingriff bringbar ist. Die ineinandergreifenden Profile erlauben einen guten Wärmeübergang vom Kühler auf die Platte, da die im Profilbereich entstehenden Luftturbulenzen den Wärmeübergang begünstigen.

Eine alternative Ausführungsform sieht vor, daß die Platte im wesentlichen luftundurchlässig und vorzugsweise leicht und wärmeisolierend ist und der Gasraum auf beiden Seiten der Platte je eine Öffnung aufweist, die mit dem Regenerator in Verbindung steht. Das Entkoppeln von Regenerator und Platte führt zu einer weiteren Gewichtsreduzierung der Platte und verringert somit die vom Hilfsantrieb aufzubringende Kraft. Die Platte sollte im Gasraum abdichtend geführt werden. Vorteilhaft ist es jedoch, wenn der Druckverlust im Regenerator so gering ist, daß der Spaltverlust zwischen Platte und Gasraumwand vernachlässigbar ist, da dann auf eine Abdichtung verzichtet werden kann.

Vorteilhaft ist es, wenn der Kühler eine im Gasraum angeordnete Wasserfläche aufweist. Dadurch wird der Anlagenaufbau vereinfacht und eine höchst effiziente Kühlung erreicht. Die Wasserfläche kann eine freie Wasserfläche sein, sie kann aber auch mit einer Membran bedeckt sein.

Um den Wärmeübergangsverlust vom Kühler auf die Platte möglichst gering zu halten, ist es vorteilhaft, wenn zumindest ein Teil des Kühlers mit der Platte verbunden ist.

In diesem Fall sieht die Erfindung vorteilhafterweise vor, daß der mit der Platte verbundene Teil des Kühlers eine mit Wasser benetzbare Fläche, z.B. einen Filter aufweist. Dies erlaubt bei einem einfachen Aufbau einen guten Wärmeübergang.

Der Erhitzer ist vorteilhafterweise so gebaut, daß er einen um eine senkrechte Achse rotierbaren, exzentrischen Parabolspiegelausschnitt und einen beweglichen, innen verspiegelten Trichter aufweist. Diese Einrichtung dient der Konzentration von Sonnenstrahlung und da in den meisten Fällen nur eine relativ geringe, ortsfeste Konzentration des Sonnenlichtes notwendig ist, kann erfindungsgemäß auf die sonst notwendige, saisonale Elevationsverstellung verzichtet werden, indem um den oberen Rand des Antriebs ein innenverspiegelter Trichter geeigneter Geometrie angebracht wird.

Eine sehr vorteilhafte Ausführungsform sieht vor, daß der Hilfsantrieb einen Umsetzer, der Fluiddruck in Kraft wandelt, aufweist und der Umsetzer einen Fluideingang aufweist, der über ein Steuerventil mit dem Gasraum verbunden ist. Diese Ausführungsform erlaubt auf einfache Weise das Selbststarten der Vorrichtung, da mit ihr ein kleiner Anteil des bei Erhitzung im Gasraum entstehenden Drucks zur Bewegung des Antriebs verwendet werden kann. Als Umsetzer ist beispielsweise ein starres Zylinder-Kolben-System, eine geschlossene Einheit mit einer flexiblen Membran oder ein Blasebalg einsetzbar.

Das Steuerventil kann elektrisch oder mechanisch angesteuert werden. Vorteilhaft ist es jedoch, wenn das Steuerventil über ein Losekopplungselement mit dem Umsetzer verbunden ist. Die Länge der Losekopplung beträgt der Differenz zwischen der Amplitude des Antriebs und dem Ventilweg des Steuerventils. Hierbei ist es vorteilhaft, wenn Federn oder sich abstoßende, gleichpolige Permanentmagnetpole im oberen und untern Totpunkt des Losekopplungselements die Richtungsumkehr des Antriebs begünstigen.

Das Losekopplungselement stellt eine einfache mechanische Steuerung dar, deren Schaltpunkte dadurch fixierbar sind, daß der Umsetzer eine Totpunktrasteinrichtung aufweist. Als Totpunktrasteinrichtung dient beispielsweise eine Federraste, die eine klar definierte obere und untere Totpunktlage des Umsetzers gewährleistet und somit zum diskontinuierlichen Schwingen des Antriebs führt, der jeweils in seinem oberen und seinem unteren Totpunkt für kurze Zeit verharrt.

Bei der Ausführungsform mit Umsetzer ist es vorteilhaft, wenn zwischen Gasraum und Steuerventil ein vorzugsweise isobarer Fluidspeicher mit Rückschlagventil angeordnet ist. Dieser Fluidspeicher erlaubt es, während der Expansionsphasen des Antriebs Druck zu speichern, der anschließend zum Betreiben des Umsetzers verwendet wird. Die Kombination aus Fluidspeicher und Rückschlagventil wirkt als pneumatischer Gleichrichter.

Vorteilhaft ist es, wenn zwischen Gasraum und Steuerventil eine Drossel angeordnet ist. Sie ermöglicht ein Einwirken auf die Systemparameter per Hand oder mittels eines Rechners oder eines Sensors der die Drossel ansteuert.

Da zum Antrieb des Umsetzer Fluid aus dem Gasraum entzogen wird, muß dieses Fluidvolumen kontinuierlich ersetzt werden. Dies kann über ein Unterdruckventil auf einer kälteren Seite des Antriebs erfolgen, das immer dann öffnet, wenn im Gasraum ein niedrigerer Druck als in der Umgebung herrscht. Um ein geschlossenes System zu erhalten sieht eine vorteilhafte Ausgestaltung jedoch vor, daß der Umsetzer einen Fluidausgang aufweist, der über einen Niederdruckspeicher mit dem Gasraum verbunden ist.

Vorteilhaft ist es, wenn die Maschine ohne zwischengeschaltetes Getriebe vom Antrieb antreibbar ist. Die entstehende Druckschwankung im Antrieb wird dabei direkt zum Antrieb der Maschine verwendet, um Verluste zu vermeiden, die sonst durch Reibung und zu bewegende Massen entstehen.

Ein hydraulischer oder pneumatischer Antrieb ist beispielsweise dadurch zu erzielen, daß die Maschine einen Arbeitskolben aufweist und im Gasraum eine Flüssigkeitsfläche angeordnet ist, die mit dem Arbeitskolben oder einem Gasraum im Arbeitskolben in Verbindung steht. Vor allem Luft oder Wasserpumpen sind auf diese Art und Weise energetisch günstig anzutreiben und außerdem kann die Flüssigkeitsfläche zugleich als Kühler dienen.

Eine besondere Ausführungsform sieht vor, daß die Maschine einen vorzugsweise gut isolierten zweiten Gasraum, in dem eine zweite Platte beweglich angeordnet ist, zwei Wärmetauscher, die jeweils auf einer Seite der Platte angeordnet sind, und einen zweiten Regenerator aufweist. Eine derartige Maschine ist als Kühlmaschine einsetzbar, indem die im Antrieb erzeugte Druckschwankung ein Durchströmen des zweiten Regenerators bewirkt.

Die zweite Platte ist direkt durch den Hilfsantrieb des Antreibs zu bewegen. Eine vorteilhafte Ausgestaltung sieht jedoch vor, daß die Maschine einen Hilfsantrieb aufweist, der mit dem Hilfsantrieb des Antriebs mechanisch oder pneumatisch gekoppelt ist.

Die verfahrensmäßige Lösung der Aufgabe erlaubt ein solches Betreiben der erfindungsgemäßen Vorrichtung, daß mit der im Antrieb entstehenden Druckschwankung die Vorrichtung von selbst startet. Die Entkopplung von Antrieb und Maschine und das Abzweigen eines Teils der Druckschwankung aus dem Antrieb zum Bewegen eines Hilfsantriebs ermöglichen es, erstmals eine Heißgasmaschine ohne Anstoß von außen in Bewegung zu setzen. Diese selbststartende Einrichtung hat den zusätzlichen Vorteil, daß sie genau in dem Moment startet, in dem Antriebsenergie zur Verfügung steht.

Eine vorteilhafte Verfahrensführung sieht vor, daß beim Expandieren dem Gasraum entnommenes Gas abgeblasen wird und beim Komprimieren die gleiche Gasmenge wieder eingezogen wird. Dadurch ist es möglich, während des Betriebs der Vorrichtung ein Gewässer zu belüften und dieses Gewässer wird in vielen Anwendungen das Gewässer sein, das zugleich der Kühlung dient.

Da die meiste Kraft während der Expansionsphase zur Verfügung steht, ist es vorteilhaft, wenn nur beim Expandieren die Maschine angetrieben wird. Während der Kompressionsphase wird die gesamte am Antrieb angreifende Kraft abgeworfen, um den Antrieb in dieser Phase zu entlasten.

Bekannt ist, daß der Mac Mahon Gifford Prozeß die theoretisch optimale Prozeßführung darstellt, die mit herkömmlichen Vorrichtungen jedoch nicht einmal annähernd erreichbar ist. Die bekannten Vorrichtungen arbeiten nach dem Stirlingprozeß, der durch zwei isotherme und zwei isochore Zustandsänderungen charakterisiert ist. Eine abgestimmte Verfahrensführung sieht jedoch vor, daß eine an der Maschine angreifende Kraft so bemessen wird und/oder das Ventil so angesteuert wird, daß ein Zyklus im P-V-Diagramm mit zwei Isochoren und zwei Isobaren entsteht.

Um Kälte zu erzeugen sieht ein vorteilhaftes Verfahren vor, daß eine im Gasraum durch Bewegen der Platte entstehende Druckschwankung einem vorzugsweise gut isolierten zweiten Gasraum, in dem eine zweite Platte beweglich angeordnet ist, und zwei Wärmetauschern, die jeweils auf einer Seite der Platte angeordnet sind, zugeführt wird und in den zwei Wärmetauschern mit einem zweiten Regenerator Wärme und Kälte erzeugt wird. Diese Kältemaschine ist im wesentlichen wie der Antrieb aufgebaut und die genannten vorteilhaften Ausgestaltungen des Antriebs gelten daher entsprechend für die Kältemaschine.

Vorteilhaft ist es, wenn die zweite Platte zur ersten phasenverschoben bewegt wird. Dadurch gleichen sich die Massenkräfte idealerweise aus und somit wird der Gleichlauf der Vorrichtung erhöht.

Während bei ähnlichen Vorrichtungen die Platten meist translatorisch bewegt werden ist es bei der erfindungsgemäßen Vorrichtung durchaus möglich, daß die Platten rotatorisch oder kippschwingungsartig bewegt werden. Die rotatorische Bewegung im Gasraum reduziert die Beschleunigungskräfte und ist vor allem bei schweren Platten sinnvoll und eine kippschwingungsartige Bewegung ist beim gleichzeitigen Einsatz mehrerer Antriebe oder zum Betreiben der oben beschriebenen Kältemaschine vorteilhaft. Dieser Antrieb hat den besonderen Vorteil, daß bei jedem Hub die gleiche Kraft erzeugt wird und dies wirkt sich auf den Gleichlauf der angetreibenen Maschine aus.

Mehrere Ausführungsbeispiele sind in den Zeichnungen dargestellt und werden im folgenden näher beschrieben. Es zeigt
- Fig. 1: eine Vorrichtung mit manuellem Hilfsantrieb und an der Platte angeordnetem Regenerator,
- Fig. 2: schematisch einen Teil der Vorrichtung aus Fig. 1 mit außenliegendem Regenerator,
- Fig. 3: schematisch einen Teil der Vorrichtung mit V-förmiger Platte,
- Fig. 4: schematisch einen Teil der Vorrichtung mit Strahlenfokusierun,g
- Fig. 5: schematisch eine Vorrichtung mit photovoltaisch angesteuertem Steuerventil,
- Fig. 6: schematisch eine Vorrichtung mit Losekopplungselement,
- Fig. 7: schematisch eine Vorrichtung mit Kältemaschine und starrer Kopplung der Hilfsantriebe,
- Fig. 8: schematisch eine Vorrichtung mit Kältemaschine und flexibler Kopplung der Hilfsantriebe und
- Fig. 9: ein P-V-Diagramm mit Mac Mahon Gifford Prozeß

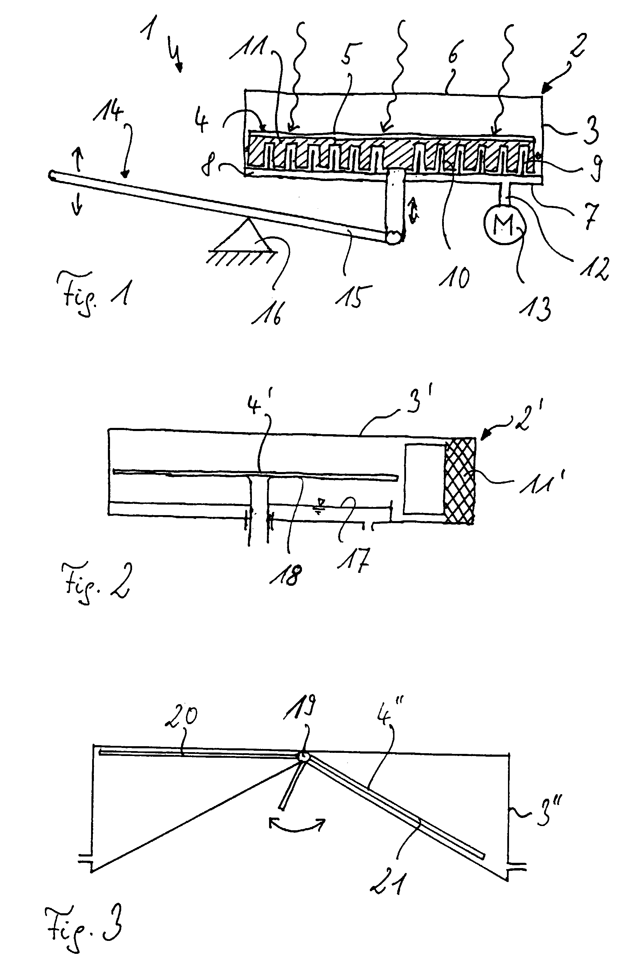

Die in Fig. 1 gezeigte Vorrichtung 1 hat einen Antrieb 2, der aus einem quaderförmigen Gasraum 3 besteht, in dem eine gasdurchlässige Platte 4 nach oben und unten bewegbar ist. Die Platte 4 hat eine schwarze Oberseite, die als Erhitzer 5 wirkt, da die Oberseite 6 des quaderförmigen Gasraumes 3 lichtdurchlässig ist. Auf der unteren Seite 7 des Gasraumes 3 ist ein Kühler 8 angeordnet, der an seiner Oberseite ein Profil 9 aus senkrechten Stegen hat, das mit einem entsprechenden Profil 10 aus Vertiefungen in der Platte 4 zusammenwirkt. Zwischen dem Profil 10 und der Oberseite der Platte liegt ein Regenerator 11, der bei einer Bewegung der Platte 4 vom Gas durchströmbar ist und Wärme zwischenspeichern kann. Darüber hinaus weist der Gasraum 3 eine Öffnung 12 auf, über die Druckschwankungen auf eine Maschine 13 übertragbar sind, um die Maschine 13 anzutreiben. Ein Hilfsantrieb 14 wird im vorliegenden Fall von einer Hebelstange 15 gebildet, die auf einem Lager 16 aufliegt und mit der die Platte 4 auf und ab bewegbar ist.

Beim Betrieb der Vorrichtung 1 wird über die Hebelstange 15 die Platte 4 auf und ab bewegt. Da die Platte 4 gasdurchlässig ist, wird hierdurch noch keine Druckschwankung erzeugt. Befindet sich die Platte 4 jedoch in ihrer unteren Lage, erwärmt die an der schwarzen Oberseite der Platte sich in Wärme umwandelnde Strahlung das Gas im Gasraum 3 und es entsteht ein Überdruck.

Wird die Platte 4 hingegen nach oben bewegt, befindet sich das Gas unterhalb der Platte 4 und kühlt sich durch den Kühler 8 ab. Dabei entsteht ein Unterdruck.

Beim Durchströmen der Platte 4 beim Anheben der Platte wird die Wärme des Gases vom Regenerator 11 aufgenommen und beim Absenken der Platte wird die Wärme vom Regenerator 11 wieder an das Gas abgegeben. Außerdem entstehen beim Ineinandergreifen der Profile 9 und 10 von Platte 4 und Kühler 8 Turbulenzen, die den Wärmeübergang vom Kühler 8 auf das Gas forcieren.

Somit wird über den Hilfsantrieb 14 nur die Platte 4 auf und ab bewegt, während durch den thermodynamischen Prozeß ein vielfaches der Energie des Hilfsantriebs 14 als Druckschwankungsenergie erzeugt wird.

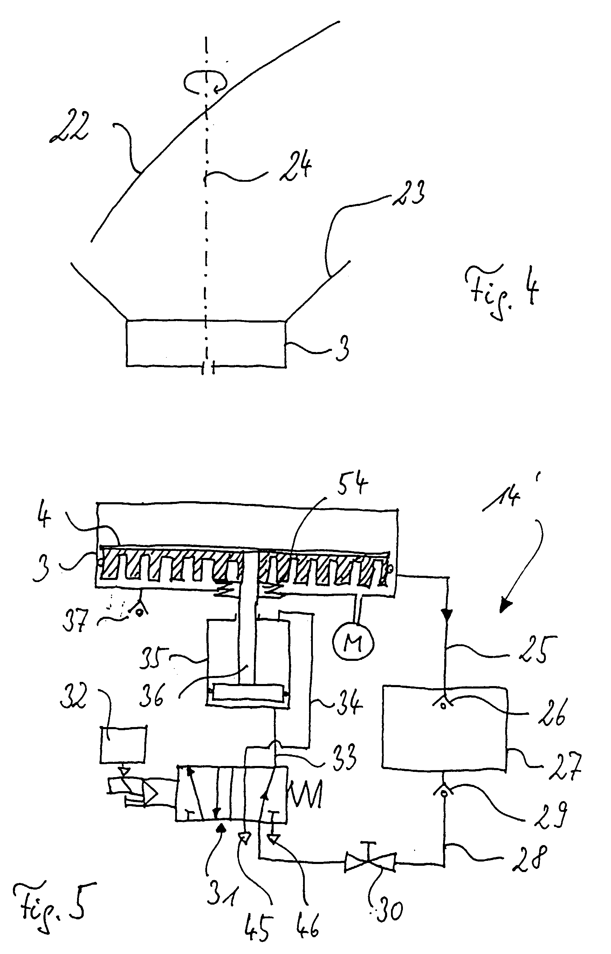

Fig. 2 zeigt eine alternative Ausführungsform 2' des Antriebs 2, bei der der Regenerator 11' außerhalb des Gasraumes 3' angeordnet ist. Die Platte 4' ist in diesem Fall gasundurchlässig, leicht und wärmeisolierend und drückt Gas beim Senken der Platte 4' durch eine untere Öffnung zum Regenerator 11' und durch eine obere Öffnung zurück in den Gasraum 3' und beim Heben der Platte 4' in der anderen Richtung. Hierbei ist die Geschwindigkeit der Platte 4' klein und die Gasdurchlässigkeit des Regenerators 11' groß, so daß die Platte 4' gegen den Gasraum 3' keine Abdichtung benötigt.

Außerdem ist in dem Antrieb 2' nach Fig. 2 als Kühler 8 eine Wasserfläche 17 vorgesehen und die Unterseite 18 der Platte bildet eine mit Wasser benetzbare Fläche, die als Kühler wirkt.

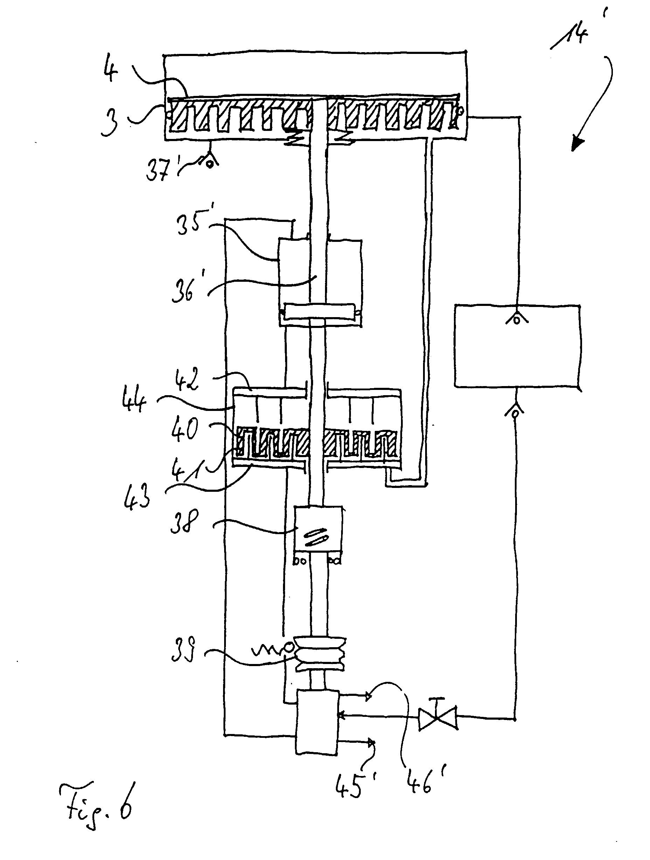

Fig. 3 zeigt eine weitere Ausführungsform des Antriebs. In diesem Fall ist eine V-förmige Platte 4" vorgesehen, die in ihrer Mitte ein Kipplager 19 aufweist, um das die Platte 4" so kippbar ist, daß eine Plattenseite 20 sich an der Oberseite eines Gasraumes 3a" befindet, während sich die andere Plattenseite 21 an der Unterseite eines weiteren Gasraumes 3b" befindet - und andersherum. Dadurch wird immer auf einer Seite das Gas gekühlt, während auf der anderen Seite das Gas erhitzt wird. Dies ermöglicht ein gleichmäßigeres Betreiben einer Maschine 13.

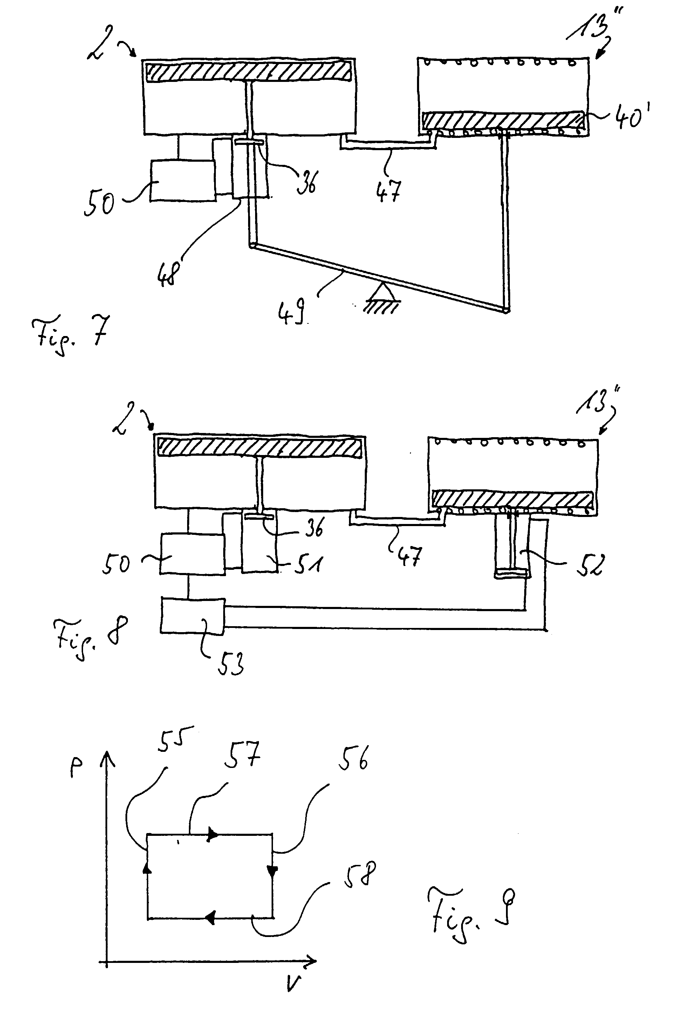

In Fig. 4 ist schematisch das Erhitzen eines Gasraumes 3 mit einem rotierbaren, exzentrischen Parabolspiegelausschnitt 22 und einem beweglichen, innen verspiegelten Trichter 23 gezeigt. Der Gasraum 3 ist dabei so montiert, daß seine Mittelachse 24 zum Polarstern weist. Der Paraboloidspiegel, der einen exzentrischen Ausschnitt aus einem Vollparaboloiden darstellt, dreht mit einer kontinuierlichen Winkelgeschwindigkeit von 15°/h um die Polarachse wie es beispielsweise in der DE 33 44 195 A1 beschrieben ist. Da im vorliegenden Fall jedoch nur eine relativ geringe Konzentration notwendig ist, ist am oberen Rand des Gasraumes 3 der Trichter 23 vorgesehen.

Fig. 5 zeigt einen alternativen Hilfsantrieb 14', um eine Platte 4 auf und ab zu bewegen. Dieser Hilfsantrieb 14' weist eine Leitung 25 auf, die über ein erstes Rückschlagventil 26 in einen Zwischenspeicher 27 führt. Eine weitere Leitung 28 führt über ein zweites Rückschlagventil 29 und eine Drossel 30 in ein Steuerventil 31, das über eine Photovoltaik-Platte 32 angetrieben kontinuierlich hin- und herbewegbar ist. Auf der anderen Seite des Steuerventils befinden sich zwei Leitungen 33 und 34, die jeweils auf eine Seite einer Kolben-Zylindereinheit 35 führen. Die Kolben-Zylindereinheit 35 hat schließlich einen Kolben 36, der die Platte 4 bewegt. Da durch die Leitung 25 Gas aus dem Gasraum entnommen wird, hat der Gasraum 3 an seiner Unterseite ein Schnüffelventil 37, um in der Kompressionsphase Gas einzusaugen.

Beim Betrieb des Antriebs 14' wird ein kleiner Gasstrom während der Expansionsphase aus dem Gasraum 3 entnommen und dem Speicher 26 zugeführt. Der sich dort aufbauende Überdruck wird gedrosselt und über das Steuerventil abwechselnd einer Seite der Kolben-Zylindereinheit 35 zugeführt, die dadurch die Platte 4 auf und ab bewegt.

In Fig. 6 ist ein weiterer alternativer Antrieb 14" gezeigt, bei dem die angetriebene Maschine 13' eine Kältemaschine ist. Ihr Aufbau entspricht im wesentlichen dem in Fig. 5 gezeigten Antreib. In diesem Fall ist jedoch der Kolben 36' der Kolben-Zylindereinheit 35' über ein Losekopplungselement 38 und eine Totpunktrasteinrichtung 39 mit dem Steuerventil 31' verbunden. Außerdem trägt die Verlängerung des Kolbens 36' eine zweite Platte 40, die mit einem zweiten Regenerator 41 zwischen zwei Wärmetauschern 42 und 43 in einem zweiten Gasraum 44 hin- und herbewegbar ist.

Somit werden beide Platten 4 und 40 mittels nur eines Hilfsantriebs 14' synchron zueinander, jedoch phasenverschoben bewegt und mit der Bewegung der Kolben wird die Steuerung angesteuert.

Eine nicht gezeigte Variante sieht vor, daß die Auslässe 45 und 46 bzw. 45' und 46' über einen Niederdruckspeicher mit dem Schnüffelventil 37 bzw. 37' verbunden sind. Dadurch wird ein geschlossenes System erzielt.

Fig. 7 zeigt eine Variante der erfindungsgemäßen Vorrichtung bei der der Antrieb 2 mit einer Kältemaschine 13" über eine Verbindungsleitung 47 in Verbindung steht. Der Hilfsantrieb 48 des Antriebs 2 ist über eine Balkenwaage 49 mit den Platte 40' der Kältemaschine 13" verbunden. Der Hilfsantrieb 48 wird hierbei durch Druckluft aus dem Antrieb 2 versorgt, die in einen Isobarspeicher mit Steuerventil 40 fließt und abwechselnd die Oberseite und die Unterseite des Kolbens 36 des Hilfsantriebs 48 beaufschlagt.

Die Balkenwaage 49 sorgt für eine starre Verbindung zwischen Antrieb 2 und Maschine 13", deren Kolben mit einer fixen Phasenverschiebung zueiner bewegbar sind.

Figur 8 zeigt eine flexible Kopplung zwischen Antrieb 2 und Kältemaschine 13", die ebenfalls über eine Verbindungsleitung 47 miteinander verbunden sind, während der Antrieb 2 und die Kältemaschine 13" jeweils einen eigenen Hilfsantrieb 51 bzw. 52 aufweisen. Auch diese Vorrichtung hat einen Isobarspeicher mit Steuerventil 50, der den Kolben 36 im Hilfsantrieb 51 wechselweise mit Druckluft beaufschlagt. Ein Teil der Druckluft fließt jedoch in einen Phasenschieber 53, der den Hilfsantrieb 52 der Kältemaschine 13" mit Druckluft versorgt.

Die Verwendung von zwei Hilfsantrieben 51 und 52 in Verbindung mit dem Phasenschieber 53 erlaubt es, die Hilfsantriebe beliebig phasenversetzt zueinander zu betreiben und auch während des Betreibens der Vorrichtung die Phasenverschiebung zu verändern.

Beim Betreiben einer erfindungsgem. Vorrichtung 1, wie sie in Fig. 1 dargestellt ist, liegt die Platte infolge Ihres Gewichtes am unteren Totpunkt und über ihr befindet sich im Gasraum 3 Gas wie bspw. Luft. Dieses Gas wird durch Strahlungsenergie, die durch die durchsichtige Oberseite 6 auf die schwarze Oberseite der Platte 4 fällt und sich dort in Wärme umwandet, erwärmt. Dadurch dehnt sich das Gas aus und drückt über die Öffnung 12 auf die Maschine 13.

Anschließend wird über die Hebelstange 15, die auf dem Lager 16 aufliegt, die Platte 4 nach oben bewegt und dabei strömt das Gas durch den in der Platte befindlichen Regenerator 11 auf die Unterseite der Platte 4, wo es sich abkühlt. Im abgekühlten Zustand ist das Gasvolumen reduziert und somit wirkt ein Unterdruck über die Öffnung 12 auf die Maschine 13, der im Wechsel mit dem Überdruck zum Betreiben der Maschine verwendet wird. Während es sehr leicht ist, auch bei größeren Vorrichtungen die Platte auf- und abzubewegen, kann mit einer derartigen Vorrichtung eine starke Druckschwankung erzielt werden, um auch größere Maschinen anzutreiben, die manuell nicht antreibbar wären.

Bei der Verwendung eines Gasraumes 3' nach Fig. 2 wird mit der Platte 4' Gas durch den Regenerator 11' gedrückt, der sich in diesem Fall außerhalb des Gasraums 3' befindet.

Beim Betrieb einer Vorrichtung nach Fig. 3 wird die V-förmige Platte 21 über das Kipplager 19 hin- und herbewegt und dabei entsteht auf einer Seite ein Überdruck, während auf der anderen Seite der Platte ein Unterdruck entsteht. Die dadurch gewonnene Druckluftschwankung ist besonders gut geeignet, konstant unter Last stehende Maschinen zu betreiben.

Beim Betreiben einer Vorrichtung nach Fig. 4 wird der Parabolspiegelausschnitt 22 mit 15° pro Stunde um seiner senkrechte Achse 24 gedreht, um dadurch eine großere Menge Sonnenlicht auf die Oberseite des Gasraums 3 zu konzentrieren.

Die Vorrichtung nach Fig. 5 ist selbststartend, da ein Teil des beim Expandieren des Gases entstehenden Überdrucks zum Bewegen der Platte verwendet wird. Hierzu wird während der Expansionspghase, d.h. während der Plattenstellung im unteren Bereich des Gasraums 3 ein Teil des Überdrucks in den Zwischenspeicher 27 geführt. Dieser Überdruck wird abgearbeitet, indem über ein hin- und herbewegtes Steuerventil 31 Druckluft abwechselnd auf die Oberseite und die Unterseite eines Kolbens 36 gefördert wird. Dieser Kolben 36 steht mit der Platte 4 in Verbindung und bewegt sie abwechselnd nach oben und unten.

Sofern genügend Sonnenlicht vorhanden ist, wärmt sich einerseits das Gas im Gasraum 3 auf und füllt den Zwischenspeicher 27 und andererseits liefert die Photovoltaikplatte 32 ausreichend elektrischen Strom, um das Steuerventil 31 hin- und herzubewegen.

Die zum Bewegen der Platte notwendige Druckluft wird dem Gasraum entzogen und in der Kompressionsphase über das Schnüffelventil 37 auf der kalten Seite der Platte wieder eingezogen.

Einerseits wird angestrebt, das Gewicht der Platte 4 möglichst gering zu halten, andererseits wird das Gewicht der Platte in der gezeigten Vorrichtung über eine Feder 54 mit nahezu konstanter Kraftkennlinie aufgefangen.

Je nach angetriebener Maschine kann es sinnvoll sein, nur den beim Expandieren im Gasraum 3 entstehenden Überdruck zum Antreiben der Maschine zu verwenden.

Die an der Maschine angreifende Kraft und die Ansteuerung des Ventils 31 werden so geregelt, daß der in Fig. 9 gezeigte Zyklus im P-V-Diagramm mit zwei Isokoren 55, 56 und zwei Isobaren 57, 58 entsteht.

Beim Betreiben der Vorrichtung nach Fig. 6 wird das Steuerventil nicht, wie in Fig. 5, elektrisch sondern mechanisch bewegt und außerdem bewegt sich eine zweite Platte 40 synchron mit der Platte 4, um Kälte zu erzeugen, da beide Platten starr miteinander verbunden sind.

Die Funktion der in den Figuren 7 und 8 gezeigten Vorrichtungen ergibt sich aus der Anlagenbeschreibung und dem bisher gesagten.

## Patentansprüche

1. Vorrichtung (1) mit einem Antrieb (2) und einer vom Antrieb (2) antreibbaren Maschine (13), wobei der Antrieb (2) einen Gasraum (3) aufweist, in dem eine Platte (4) beweglich angeordnet ist, einen Erhitzer (5) auf einer Seite der Platte, um das Gas des Gasraumes (3) zu erhitzen, und einen Kühler (8) auf der anderen Seite der Platte, um das Gas des Gasraumes (3) zu kühlen, und einen Regenerator (11), um Wärme des Gases zwischenzuspeichern, dadurch gekennzeichnet, daß ein Hilfsantrieb (14) so angeordnet ist, daß mit ihm die Platte (4) bewegbar ist, ohne die Maschine (13) anzutreiben.

2. Vorrichtung nach Anspruch 1, dadurch gekennzeichnet, daß die Platte (4) gasdurchlässig ist und der Regenerator (11) mit der Platte (4) verbunden ist.

3. Vorrichtung nach Anspruch 2, dadurch gekennzeichnet, daß der Kühler (8) auf einer der Platte (4) gegenüberliegenden Seite angeordnet ist und ein Profil (9) aufweist, das mit einem entsprechenden Profil (10) der Platte (4) in Eingriff bringbar ist.

4. Vorrichtung nach Anspruch 1, dadurch gekennzeichnet, daß die Platte (4) im wesentlichen luftundurchlässig und vorzugsweise leicht und wärmeisolierend ist und der Gasraum (3') auf beiden Seiten der Platte (4') je eine Öffnung aufweist, die mit dem Regenerator (11') in Verbindung steht.

5. Vorrichtung nach einem der vorhergehenden Ansprüche, dadurch gekennzeichnet, daß der Kühler (8) eine im Gasraum angeordnete Wasserfläche (17) aufweist.

6. Vorrichtung nach einem der vorhergehenden Ansprüche, dadurch gekennzeichnet, daß zumindest ein Teil des Kühlers (8) mit der Platte (4') verbunden ist.

7. Vorrichtung nach Anspruch 6, dadurch gekennzeichnet, daß der mit der Platte (4) verbundene Teil des Kühlers (8) eine mit Wasser benetzbare Fläche (18) aufweist.

8. Vorrichtung nach einem der vorhergehenden Ansprüche, dadurch gekennzeichnet, daß der Erhitzer (5) einen um eine im wesentlichen senkrechte Achse (24) rotierbaren, exzentrischen Parabolspiegelausschnitt (12) und einen beweglichen, innen verspiegelten Trichter (23) aufweist.

9. Vorrichtung nach einem der vorhergehenden Ansprüche, dadurch gekennzeichnet, daß der Hilfsantrieb (14') einen Umsetzer (35), der Fluiddruck in Kraft wandelt, aufweist und der Umsetzer (35) einen Fluideingang aufweist, der über ein Steuerventil (31) mit dem Gasraum (3) verbunden ist.

10. Vorrichtung nach Anspruch 9, dadurch gekennzeichnet, daß das Steuerventil (31') über ein Losekopplungselement (38) mit dem Umsetzer (35) verbunden ist.

11. Vorrichtung nach einem der Ansprüche 9 oder 10, dadurch gekennzeichnet, daß der Umsetzer (35) eine Totpunktrasteinrichtung (39) aufweist.

12. Vorrichtung nach einem der Ansprüche 9 bis 11, dadurch gekennzeichnet, daß zwischen Gasraum (3) und Steuerventil (31) ein vorzugsweise isobarer Fluidspeicher (27) mit Rückschlagventil (26) angeordnet ist.

13. Vorrichtung nach einem der Ansprüche 9 bis 12, dadurch gekennzeichnet, daß zwischen Gasraum (3) und Steuerventil (31) eine Drossel (30) angeordnet ist.

14. Vorrichtung nach einem der Ansprüche 9 bis 13, dadurch gekennzeichnet, daß der Umsetzer (35) einen Fluidausgang (45, 46; 45', 46') aufweist, der über einen Niederdruckspeicher mit dem Gasraum (3) verbunden ist.

15. Vorrichtung nach einem der vorhergehenden Ansprüche, dadurch gekennzeichnet, daß die Maschine (13) ohne zwischengeschaltetes Getriebe vom Antrieb (14) antreibbar ist.

16. Vorrichtung nach einem der vorhergehenden Ansprüche, dadurch gekennzeichnet, daß die Maschine (13) einen Arbeitskolben aufweist und im Gasraum eine Flüssigkeitsfläche (17) angeordnet ist, die mit dem Arbeitskolben in Verbindung steht.

17. Vorrichtung nach einem der vorhergehenden Ansprüche, dadurch gekennzeichnet, daß die Maschine (13) einen vorzugsweise gut isolierten zweiten Gasraum (44), in dem eine zweite Platte (40) beweglich angeordnet ist, zwei Wärmetauscher (42, 43), die jeweils auf einer Seite der Platte (40) angeordnet sind, und einen zweiten Regenerator (41) aufweist.

18. Vorrichtung nach Anspruch 17, dadurch gekennzeichnet, daß die Maschine (13) einen zweiten Hilfsantrieb (52) aufweist, der mit dem Hilfsantrieb des Antriebs mechanisch oder pneumatisch gekoppelt ist.

19. Verfahren zum Betreiben eines Antriebs (2) nach einem der vorhergehenden Ansprüche, dadurch gekennzeichnet, daß ein Teil des beim Expandieren oder Komprimieren des Gases entstehenden Über- oder Unterdrucks zum Bewegen der Platte (4) verwendet wird.

20. Verfahren nach Anspruch 19, dadurch gekennzeichnet, daß beim Expandieren dem Gasraum (3) entnommenes Gas abgeblasen wird und beim Komprimmieren die gleiche Gasmenge wieder eingezogen wird.

21. Verfahren nach einem der Ansprüche 19 oder 20, dadurch gekennzeichnet, daß nur beim Expandiern die Maschine (13) angetrieben wird.

22. Verfahren nach einem der Ansprüche 19 bis 21, dadurch gekennzeichnet, daß eine an der Maschine angreifende Kraft so bemessen wird und/oder das Ventil so angesteuert wird, daß ein Zyklus im P-V-Diagramm mit zwei Isochoren (55, 56) und zwei Isobaren (57, 58) entsteht.

23. Verfahren nach einem der Ansprüche 19 bis 22, dadurch gekennzeichnet, daß eine im Gasraum (3) durch Bewegen der Platte (4) entstehende Druckschwankung einem vorzugsweise gut isolierten zweiten Gasraum (44) in dem eine zweite Platte (40) beweglich angeordnetet ist, und zwei Wärmeaustauschern (42, 43), die jeweils auf einer Seite der Platte (40) angeordnet sind, zugeführt wird und in den zwei Wärmetauschern (42, 43) mit einem zweiten Regenerator (41) Wärme und Kälte erzeugt wird.

24. Verfahren nach Anspruch 23, dadurch gekennzeichnet, daß die zweite Platte (40) zur ersten (4) phasenverschoben bewegt wird.

25. Verfahren nach einem der Ansprüche 19 bis 24, dadurch gekennzeichnet, daß die Platten (4, 4', 4", 40) in den Räumen translatorisch, rotatorisch oder kippschwingungsartig bewegt werden.

## Claims

1. A device (1) with a drive (2) and a machine (13) capable of being driven by the drive (2), where the drive (2), where the drive (2) has a gas space (3) in which a plate (4) is movably arranged, a heater (5) on one side of the plate to heat the gas in the gas space (3), and a cooler (8) on the other side of the plate to cool the gas in the gas space (3), and a regenerator (11) to store the heat of the gas temporarily, characterized in that an auxiliary drive (14) is arranged in such a way that the plate (4) can be moved with it without driving the machine (13).

2. A device according to claim 1, characterized in that the plate (4) is gas-permeable, and the regenerator (11) is connected to the plate (4).

3. A device according to claim 2, characterized in that the cooler (8) is arranged on a side opposite the plate (4) and has a profile (9) that can engage with a corresponding profile (10) of the plate (4).

4. A device according to claim 1, characterized in that the plate (4) is essentially airtight and is preferably light and thermally insulating, and the gas space (3') has an orifice connected to the regenerator (11') on both sides of the plate (4').

5. A device according to one of the preceding claims, characterized in that the cooler (8) has a water surface (17) arranged in the gas space.

6. A device according to one of the preceding claims, characterized in that at least part of the cooler (8) is connected to the plate (4').

7. A device according to claim 6, characterized in that the part of the cooler (8) connected to the plate (4) has a surface (18) that can be wetted with water.

8. A device according to one of the preceding claims, characterized in that the heater (5) has an eccentric parabolic mirror segment (12) which can be rotated about an essentially perpendicular axis (24), and it has a movable funnel (23) mirrorized on the inside.

9. A device according to one of the preceding claims, characterized in that the auxiliary drive (14') has a converter (35) which converts fluid pressure into force, and the converter (35) has a fluid inlet connected by a control valve (31) to the gas space (3).

10. A device according to claim 9, characterized in that the control valve (31') is connected to the converter (35) by a loose coupling element (38).

11. A device according to one of claims 9 or 10, characterized in that the converter (35) has a dead center locking device (39).

12. A device according to one of claims 9 through 11, characterized in that a fluid reservoir (27), preferably isobaric, with a non-return valve (26) is arranged between the gas space (3) and the control valve (31).

13. A device according to one of claims 9 through 12, characterized in that a throttle (30) is arranged between the gas space (3) and the control valve (31).

14. A device according to one of claims 9 through 13, characterized in that the converter (35) has a fluid outlet (45, 46; 45', 46') which is connected to the gas space (3) via a low-pressure reservoir.

15. A device according to one of the preceding claims, characterized in that the machine (13) can be driven by the drive (14) without an intermediate gear.

16. A device according to one of the preceding claims, characterized in that the machine (13) has a working piston, and a liquid surface (17) which is connected to the working piston is arranged in the gas space.

17. A device according to one of the preceding claims, characterized in that the machine (13) has a second gas space (44), preferably well insulated, in which a second plate (40) is arranged movably, two heat exchangers (42, 43), each arranged on one side of the plate (40), and a second regenerator (41).

18. A device according to claim 17, characterized in that the machine (13) has a second auxiliary drive (52) which is pneumatically or mechanically linked to the auxiliary drive of the drive.

19. A method of operating a drive (2) according to one of the preceding claims, characterized in that a portion of the excess pressure or vacuum resulting from the expansion or compression of the gas is used to move the plate (4).

20. A method according to claim 19, characterized in that gas removed from the gas space (3) is blown off in expansion, and the same amount of gas is taken in again in compression.

21. A method according to one of claims 19 or 20, characterized in that the machine (13) is driven only in expansion.

22. A method according to one of claims 19 through 21, characterized in that a force acting on the machine is dimensioned and/or the valve is driven to yield a cycle with two isochores (55, 56) and two isobars (57, 58) in the P-V diagram.

23. A method according to one of claims 19 through 22, characterized in that a transient pressure in the gas space (3) caused by movement of the plate (4) is supplied to a second gas space (44) which is preferably well insulated and has a second plate (40) movably arranged in it, and two heat exchangers (42, 43), each arranged on one side of the plate (40), and heat and cold are generated with a second regenerator (41) in the two heat exchangers (42, 43).

24. A method according to claim 23, characterized in that the second plate (40) is moved out of phase with the first (4).

25. A method according to one of claims 19 through 24, characterized in that the plates (4, 4', 4", 40) undergo translational, rotational or relaxed oscillatory movements.

## Revendications

1. Dispositif (1) comprenant un moteur (2) et une machine (13) pouvant être entraînée par le moteur (2), le moteur (2) présentant une enceinte à gaz (3) dans laquelle une plaque (4) est montée, avec une aptitude de mobilité, un réchauffeur (5) sur l'une des faces de la plaque, pour réchauffer le gaz de l'enceinte à gaz (3), un refroidisseur (8) sur l'autre face de la plaque, pour refroidir le gaz de l'enceinte à gaz (3), et un régénérateur (11), pour stocker provisoirement de la chaleur du gaz, caractérisé en ce qu'un moteur auxiliaire (14) est monté de façon à ce que la plaque (4) puisse être mise en mouvement avec ce dernier, sans entraîner la machine (13).

2. Dispositif selon la revendication 1, caractérisé en ce que la plaque (4) est perméable aux gaz et en ce que le régénérateur (11) est lié à la plaque (4).

3. Dispositif selon la revendication 2, caractérisé en ce que le refroidisseur (8) est placé sur une face en regard de la plaque (4) et présente un profil (9) qui peut être mis en prise avec un profil correspondant (10) de la plaque (4).

4. Dispositif selon la revendication 1, caractérisé en ce que la plaque (4) est sensiblement imperméable à l'air et, de préférence, légère et thermo-isolante, et en ce que l'enceinte à gaz (3') présente, de part et d'autre de la plaque (4), une lumière qui est en communication avec le régénérateur (11').

5. Dispositif selon l'une des revendications qui précèdent, caractérisé en ce que le refroidisseur (8) présente une surface d'eau (17) aménagée dans l'enceinte à gaz.

6. Dispositif selon l'une des revendications qui précèdent, caractérisé en ce qu'au moins une partie du refroidisseur (8) est liée à la plaque (4').

7. Dispositif selon la revendication 6, caractérisé en ce que la partie du refroidisseur (8) liée à la plaque (4) présente une surface (18) mouillable par de l'eau.

8. Dispositif selon l'une des revendications qui précèdent, caractérisé en ce que le réchauffeur (5) présente une découpure (12) en forme de miroir parabolique, excentrée et tournant autour d'un axe sensiblement vertical (24), et un entonnoir mobile (23), métallisé à l'intérieur.

9. Dispositif selon l'une des revendications qui précèdent, caractérisé en ce que le moteur auxiliaire (14') présente un convertisseur (35) qui convertit la pression du fluide en force, et en ce que le convertisseur (35) présente une entrée de fluide, qui est mise en relation avec l'enceinte à gaz (3) par une vanne de pilotage (31).

10. Dispositif selon la revendication 9, caractérisé en ce que la vanne de pilotage (31') est en relation avec le convertisseur (35) par l'intermédiaire d'un élément de couplage lâche (38).

11. Dispositif selon l'une des revendications 9 ou 10, caractérisé en ce que le convertisseur (35) présente un mécanisme d'enclenchement du point mort (39).

12. Dispositif selon l'une des revendications 9 à 11, caractérisé en ce qu'un accumulateur de fluide (27), de préférence isobare, comprenant un clapet de non-retour (26), est placé entre l'enceinte à gaz (3) et la vanne de pilotage (31).

13. Dispositif selon l'une des revendications 9 à 12, caractérisé en ce qu'un étrangleur (30) est placé entre l'enceinte à gaz (3) et la vanne de pilotage (31).

14. Dispositif selon l'une des revendications 9 à 13, caractérisé en ce que le convertisseur (35) présente une sortie de fluide (45, 46; 45', 46') qui est en relation avec l'enceinte à gaz (3) par l'intermédiaire d'un accumulateur basse pression.

15. Dispositif selon l'une des revendications qui précèdent, caractérisé en ce que la machine (13) peut être entraînée par le moteur (14) sans transmission intermédiaire.

16. Dispositif selon l'une des revendications qui précèdent, caractérisé en ce que la machine (13) présente un piston moteur et en ce qu'une surface de liquide (17) qui est en relation avec le piston moteur est prévue dans l'enceinte à gaz.

17. Dispositif selon l'une des revendications qui précèdent, caractérisé en ce que la machine (13) présente une seconde enceinte à gaz (44), de préférence bien isolée, dans laquelle une seconde plaque (40) est montée avec une aptitude de mobilité, deux échangeurs de chaleur (42, 43) respectivement disposés sur une face de la plaque (40), et un second régénérateur (41).

18. Dispositif selon la revendication 17, caractérisé en ce que la machine (13) présente un second moteur (52), couplé par des moyens mécaniques ou pneumatiques au moteur auxiliaire du moteur.

19. Procédé pour l'exploitation d'un moteur (2) selon l'une des revendications qui précèdent, caractérisé en ce qu'une partie de la surpression ou de la dépression générée lors de la détente ou de la compression du gaz est utilisée pour mettre la plaque (4) en mouvement.

20. Procédé selon la revendication 19, caractérisé en ce que du gaz prélevé dans l'enceinte à gaz (3) lors de la détente est mis à l'atmosphère, et en ce que la même quantité de gaz est réaspirée lors de la compression.

21. Procédé selon l'une des revendications 19 ou 20, caractérisé en ce que la machine (13) n'est entraînée que lors de la détente.

22. Procédé selon l'une des revendications 19 à 21, caractérisé en ce qu'un effort appliqué à la machine est proportionné et/ou la vanne est commandée de façon à ce qu'un cycle soit généré dans le diagramme pression-volume, avec deux isochores (55, 56) et deux isobares (57, 58).

23. Procédé selon l'une des revendications 19 à 22, caractérisé en ce qu'une fluctuation de pression engendrée dans l'enceinte à gaz (3) par la mise en mouvement de la plaque (4) est dirigée sur une seconde enceinte à gaz (44), de préférence bien isolée, dans laquelle une seconde plaque (40) est disposée avec une aptitude de mobilité, et sur deux échangeurs de chaleur (42, 43), respectivement disposés sur une face de la plaque (40), et en ce que de la chaleur et du froid sont produits dans les deux échangeurs de chaleur (42, 43) avec un second régénérateur (41).

24. Procédé selon la revendication 23, caractérisé en ce que la seconde plaque (40) est mise en mouvement avec un déphasage par rapport à la première (4).

25. Procédé selon l'une des revendications 19 à 24, caractérisé en ce que dans les enceintes, les plaques (4, 4', 4'', 40) sont animées d'un mouvement de translation, de rotation ou d'oscillation basculante.
